(19) Europäisches Patentamt
European Patent Office
Office européen des brevets

(11) **EP 1 970 152 B1**

(12) **EUROPÄISCHE PATENTSCHRIFT**

(45) Veröffentlichungstag und Bekanntmachung des Hinweises auf die Patenterteilung:
**03.06.2020 Patentblatt 2020/23**

(51) Int Cl.:
***B23K 1/00*** *(2006.01)*  ***B23K 11/11*** *(2006.01)*
***B23K 11/20*** *(2006.01)*  ***B23K 101/00*** *(2006.01)*

(21) Anmeldenummer: **08002994.5**

(22) Anmeldetag: **19.02.2008**

(54) **Verfahren zum Herstellen einer Mehrblechverbindung und Vorrichtung zur Durchführung des Verfahren**

Multiple sheet metall connection producing method and device to carry out the method

Procédé de réalisation d'une liaison de tôle multiple et dispositif de mise en oeuvre

(84) Benannte Vertragsstaaten:
**DE FR GB IT**

(30) Priorität: **16.03.2007 DE 102007012628**

(43) Veröffentlichungstag der Anmeldung:
**17.09.2008 Patentblatt 2008/38**

(73) Patentinhaber: **Bayerische Motoren Werke Aktiengesellschaft**
**80809 München (DE)**

(72) Erfinder:
• **Altnau, Dirk**
**06844 Dessau (DE)**
• **Sitte, Gernot**
**06110 Halle/Saale (DE)**

(56) Entgegenhaltungen:
EP-A1- 0 590 989    DE-C1- 19 512 089
DE-C1- 19 729 967    US-A- 3 860 778

EP 1 970 152 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Herstellen einer Mehrblechverbindung zwischen mindestens drei Blech- und insbesondere Stahlblechteilen gemäß dem Oberbegriff des Anspruchs 1, von denen zwei unmittelbar übereinanderliegende Blechteile eine niedrigere Wärmeleitfähigkeit als ein auf diesen aufliegendes drittes Blechteil besitzen.

Es ist allgemein bekannt, Zwei- oder Dreiblechverbindungen aus artgleichen Stählen durch Punktschweißen herzustellen, wobei an Dreiblechverbindungen vergleichbare Ströme wie bei Zweiblechverbindungen, jedoch höhere Spannungen benötigt werden.

Weiterhin ist es bekannt (DE 195 12 089 C1, DE 197 29 967 C1), punktförmige Lötverbindungen an Feinblechen unter Verwendung von Punktschweißmaschinen bei vorhergehender Lotdepotablage auf einem der Blechteile zu erzeugen. Dabei werden ähnlich hohe statische Bruchlasten wie bei punktverschweißten Feinblechen und sogar noch höhere Schwingfestigkeiten erreicht.

Aus der US3860778A ist ein Verfahren gemäß dem Oberbegriff des Anspruchs 1 bekannt.

Aus der DE19512089C1 ist eine Lötverbindung von Blechen bekannt, Insbesondere bei Kraftfahrzeugkarosserien in Leichtbauweise ergibt sich häufig die Forderung, nicht artgleiche Stahlbleche als Dreiblechverbindung zu fügen. Dabei stellt sich bei Dreiblechverbindungen, die aus miteinander punktverschweißten hochfesten und einem außen liegenden, dünnen weichen Stahlblech hergestellt sind, das Problem, dass die Schweißlinse nicht - wie gewünscht - etwa 50% der Blechdicke des weichen Stahlblechs erfasst, sondern nur dessen Oberfläche anschmilzt, so dass die Anbindung an dieser Stelle eine ungenügende, insbesondere stark schwankende Festigkeit besitzt.

Aufgabe der Erfindung ist es, ein Verfahren zur Herstellung einer Mehrblechverbindung der eingangs genannten Art so auszubilden, dass Blechteile mit unterschiedlichen Materialeigenschaften auf herstellungsmäßig einfache und prozesssichere Weise derart miteinander verbunden werden, dass starke Schwankungen der Bruchlast vermieden werden.

Diese Aufgabe wird erfindungsgemäß durch ein Verfahren zur Herstellung einer Mehrblechverbindung mit den Merkmalen des Patentanspruchs 1 gelöst.

Erfindungsgemäß wird dabei aus übereinanderliegenden Stahlblechen unterschiedlicher Festigkeit und dementsprechend unterschiedlicher Wärmeleitfähigkeit das Punktschweißen mit dem Punktlöten derart kombiniert, dass die Verbindung zwischen den höherfesten Blechteilen aus einer Punktschweißung und die Anbindung des oder der weicheren Blechteile aus einer Punktlötung besteht, mit dem weiteren, prozesstechnischen Effekt, dass beide Verbindungsarten gleichzeitig in einem einzigen Fügeschritt hergestellt werden. Das Ergebnis ist ein mehrlagiger Blechverbund aus ungleichartigen Blechteilen, die mit geringem Fertigungsaufwand durch festigkeitsmäßig angepasste und auf die jeweiligen Blechmaterialien abgestimmte Schmelzfügestellen miteinander verbunden sind und nur gering schwankende Bruchlasten aufweisen.

In einem besonders bevorzugten Anwendungsfall der Erfindung sind die höherfesten, miteinander punktverschweißten Bleche Bestandteil der Tragstruktur einer Kraftfahrzeugkarosserie, während das angelötete, weichere Blechteil für die Karosserie-Außenhaut vorgesehen ist.

In weiterer vorteilhafter Ausgestaltung der Erfindung ist das Lotdepot als Auflageteil gestaltet, welches an eines der zu verlötenden Blechteile angeheftet wird und zwischen diesen einen engen Fügespalt freihält, derart, dass es dann beim nachfolgenden Fügeprozess eine Strombrücke zwischen den Blechteilen bildet und unter der dabei erzeugten Wärme- und Druckwirkung aufgeschmolzen wird und die Blechteile als dünne, lokale Hartlotschicht miteinander verbindet.

Nach einer alternativen Ausführungsform der Erfindung ist in das Blechteil höherer Wärmeleitfähigkeit auf Seiten der Lötverbindung vorzugsweise eine Aufnahmetasche für das Lotdepot vorgeformt, um so eine flächenmäßig exakt abgegrenzte Lötverbindungsstelle zwischen den Blechteilen zu erhalten. Vor allem bei Blechteilen mit Sichtoberflächen empfiehlt es sich in diesem Fall, die durch die Aufnahmetasche erzeugte, stufenförmige Erhebung auf der der Aufnahmetasche gegenüberliegenden Sichtoberfläche des Blechteils unter der kombinierten Druck- und Wärmeeinwirkung des Widerstandsschweiß- und -lötprozesses zurück zu verformen.

Ein weiterer Vorteil der Erfindung liegt in dem niedrigen Fertigungsmittelaufwand. So wird die erfindungsgemäße Mehrblechverbindung zweckmäßigerweise mit Hilfe einer üblichen Punktschweißmaschine hergestellt. Vorzugsweise besitzt deren auf Seiten der Punktschweißstelle angeordnete Elektrode einen dem gewünschten Schweißlinsendurchmesser im Wesentlichen entsprechenden Arbeitsflächendurchmesser in der Größenordnung von $5*\sqrt{t}$ , mit der Blechdicke t.

In besonders bevorzugter Weise schließlich wird der Elektrodendruck auf die unterschiedlichen Festigkeiten der Blechteile abgestimmt, derart, dass die an dem Blechteil höherer Wärmeleitfähigkeit anliegende Elektrode der Punktschweißvorrichtung einen größeren Arbeitsflächendurchmesser besitzt als die Gegenelektrode, so dass unerwünschte Elektrodenabdrücke, die durch eine übermäßige Flächenpressung an dem Blechteil höherer Leitfähigkeit und geringerer Festigkeit entstehen könnten, wirksam unterbunden werden.

Die Erfindung wird nunmehr anhand zweier Ausführungsbeispiele in Verbindung mit den Zeichnungen näher erläutert. Es zeigen in stark schematisierter Darstellung:

**Fig. 1**        eine Mehrblechverbindung im Schnitt;

**Fig. 2a, b** eine vergrößerte Teildarstellung der Mehrblechverbindung gemäß Fig. 1 vor (a) und nach (b) dem Fügevorgang; und

**Fig. 3a, b** eine der Fig. 2 entsprechende Darstellung eines modifizierten Ausführungsbeispiels der Erfindung.

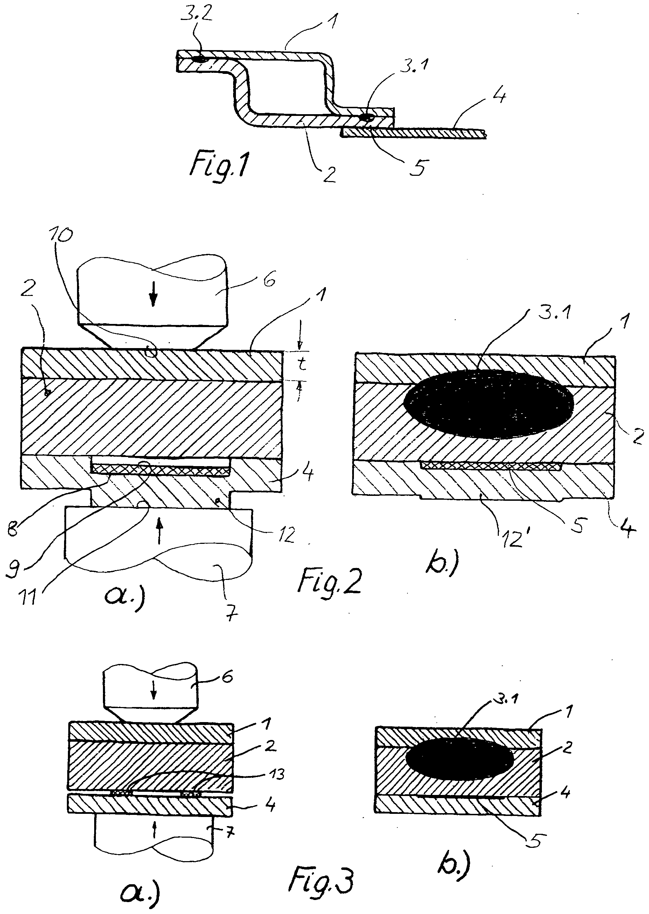

Die in Fig. 1 gezeigte Dreiblechverbindung besteht aus zwei hochfesten Stahlblechen 1, 2 vergleichsweise niedriger Wärmeleitfähigkeit, die an den Schweißlinsen 3.1 und 3.2 miteinander zu einem Hohlträger beispielsweise einer Kraftfahrzeugkarosserie punktverschweißt sind, sowie einem weicheren Blechteil 4 höherer Wärmeleitfähigkeit, welches als Bestandteil der Fahrzeugaußenhaut über eine punktförmige Lötverbindung 5 am mittleren Blechteil 2 befestigt ist.

Wie aus Fig. 2 ersichtlich ist, werden die Blechteile 1, 2 und 4 zwischen die Elektroden 6, 7 einer üblichen und ansonsten nicht näher gezeigten Punktschweißvorrichtung eingesetzt, wobei das Blechteil 4 zuvor mit einer Aufnahmetasche 8 vorgeformt und diese mit einem Lotdepot 9 belegt wird.

Die an dem hochfesten Blechteil 1 anliegende Elektrode 6 besitzt eine kegelstumpfförmige Elektrodenspitze mit einer Arbeitsfläche 10, deren Durchmesser dem gewünschten Schweißlinsendurchmesser entspricht und größenordnungsmäßig bei $5 * \sqrt{t}$ liegt, wobei t gleich der Blechdicke ist. Um beim Widerstands-Fügevorgang, wo zwischen den Elektroden 6, 7 ein elektrischer Stromfluss erzeugt wird und diese gleichzeitig in Pfeilrichtung zusammengepresst werden, eine übermäßige Flächenpressung auf Seiten des weicheren Blechteils 4 zu vermeiden, ist die Arbeitsfläche 11 der Elektrode 7 im Durchmesser größer als die korrespondierende Arbeitsfläche 10 der Gegenelektrode 6 bemessen. Unter der Druck- und Wärmeeinwirkung des Fügevorgangs bildet sich zwischen den Stahlblechen 1, 2 eine Schweißlinse 3.1, die etwa je 50% der Blechdicke t der Blechteile 1 bzw. 2 erfasst, und zugleich entsteht im Bereich des Lotdepots 9 eine Hartlötverbindung 5 zwischen den Blechteilen 2 und 4 (Fig. 2b). Die von der Arbeitsfläche 11 der Elektrode 7 erzeugte Flächenpressung reicht aus, die durch die Einprägung der Aufnahmetasche 8 auf der dieser gegenüberliegenden Blechteilseite des Blechteils 4 gebildete, stufenförmige Erhebung 12 (Fig. 2a) bei der Widerstandserwärmung unter der gleichzeitigen Druckeinwirkung seitens der Elektrode 7 zumindest weitgehend zurück zu verformen, so dass auf der Außenseite des Blechteils 4 eine allenfalls geringfügige Oberflächenverdickung 12' (Fig. 2b) verbleibt.

Die Mehrblechverbindung nach Fig. 3, wo die dem ersten Ausführungsbeispiel entsprechenden Komponenten durch das gleiche Bezugszeichen gekennzeichnet sind, unterscheidet sich von diesem hauptsächlich dadurch, dass auf eine eigens eingeprägte Aufnahmetasche im Blechteil 4 verzichtet und stattdessen das Lotdepot als ring- oder strangförmige Auflage 13 ausgebildet wird, welche im Bereich der herzustellenden Lötverbindung 5 an das Blechteil 2 oder 4 angeheftet und dann unter der Druck- und Wärmeeinwirkung des Fügevorgangs aufgeschmolzen wird und im erhärteten Zustand eine dünne, lokale Lötverbindungsschicht zwischen den Blechteilen 2, 4 bildet. Im Übrigen sind der Aufbau und die Herstellungsweise der Dreiblechverbindung nach Fig. 3 die gleichen wie bei dem ersten Ausführungsbeispiel.

**Patentansprüche**

1. Verfahren zum Herstellen einer Mehrblechverbindung zwischen mindestens drei Blech- und insbesondere Stahlblechteilen, von denen zwei unmittelbar übereinanderliegende Blechteile eine geringere Wärmeleitfähigkeit als ein auf diesen aufliegendes drittes Blechteil besitzen, **dadurch gekennzeichnet, dass**
die Blechteile (1, 2, 4) im Wege einer punktförmigen Widerstandserhitzung an den Blechteilen (1, 2) geringerer Wärmeleitfähigkeit miteinander verschweißt und zugleich auf Seiten des Blechteils (4) höherer Wärmeleitfähigkeit im Bereich eines zuvor aufgebrachten Lotdepots (9) miteinander verlötet werden.

2. Verfahren nach Anspruch 1, **dadurch gekennzeichnet, dass** die Blechteile (1, 2) geringerer Wärmeleitfähigkeit aus je einem hoch- oder höchstfesten Stahlblech und das Blechteil (4) höherer Wärmeleitfähigkeit aus einem weicheren Stahlblech einer Kraftfahrzeugkarosserie bestehen.

3. Verfahren nach Anspruch 1 oder 2, **dadurch gekennzeichnet, dass** als Lotdepot (9) ein vorgeformtes und unter der Einwirkung der Widerstandserhitzung schmelzverflüssigtes Einlegeteil (13) zwischen den Blechteile (2, 4) vorgesehen ist.

4. Verfahren nach einem der vorhergehenden Ansprüche, **dadurch gekennzeichnet, dass**
in das Blechteil (4) höherer Wärmeleitfähigkeit auf Seiten der Lötverbindung (5) eine Aufnahmetasche (8) für das Lotdepot (9) vorgeformt ist.

5. Verfahren nach Anspruch 4, **dadurch gekennzeichnet, dass** die durch die Aufnahmetasche (8) erzeugte, stufenförmige Erhebung (12) auf der der Aufnahmetasche gegenüberliegenden Blechteilseite bei der Widerstandserhitzung unter gleichzeitiger Druckeinwirkung zumindest teilweise rückverformt ist.

## Claims

1. A method for producing a multi-sheet connection between at least three sheet-metal parts, and especially steel sheet-metal parts, of which two sheet-metal parts lying directly one above another have a lower thermal conductivity than a third sheet-metal part lying on them, **characterised in that** the sheet-metal parts (1, 2, 4) by way of spot resistance heating on the sheet-metal parts (1, 2) of lower thermal conductivity are welded together and at the same time on sides of the sheet-metal part (4) of higher thermal conductivity are soldered together in the region of a previously applied solder deposit (9).

2. A method according to Claim 1, **characterised in that** the sheet-metal parts (1, 2) of lower thermal conductivity consist of one high-strength or ultra-high-strength steel sheet in each case and the sheet-metal part (4) of higher thermal conductivity consists of a softer steel sheet of a motor vehicle body.

3. A method according to Claim 1 or Claim 2, **characterised in that** an inlay part (13) which is pre-formed, and which is melt-liquefied under the action of the resistance heating is provided as solder deposit (9) between the sheet-metal parts (2, 4).

4. A method according to one of the preceding claims, **characterised in that** a receiving pocket (8) for the solder deposit (9) is pre-formed in the sheet-metal part (4) of higher thermal conductivity on sides of the soldered joint (5).

5. A method according to Claim 4, **characterised in that** the step-shaped elevation (12) produced by the receiving pocket (8), on that side of the sheet-metal part which lies opposite the receiving pocket, is at least partly re-deformed upon the resistance heating with simultaneous action of pressure.

## Revendications

1. Procédé de fabrication d'une liaison multi-tôles entre au moins trois pièces en tôle et en particulier en tôle d'acier parmi lesquelles deux pièces en tôle directement superposées ont une conductivité thermique plus faible qu'une troisième pièce en tôle appliquée sur celle-ci, **caractérisé en ce que** les pièces en tôle (1, 2, 4) sont soudées les unes aux autres par un chauffage par résistance ponctuel sur les pièces en tôle (1, 2) ayant une conductivité thermique plus faible, et sont simultanément brasées les unes aux autres sur des côtés de la pièce en tôle (4) ayant une conductivité thermique plus élevée dans la zone d'un dépôt de brasure (9) appliqué antérieurement.

2. Procédé conforme à la revendication 1, **caractérisé en ce que** les pièces en tôle (1, 2) ayant une plus faible conductivité thermique sont chacune constituées d'une tôle d'acier de haute ou de très haute résistance et la pièce en tôle (4) ayant une conductivité thermique plus élevée est constituée d'une tôle d'acier plus doux de carrosserie de véhicule.

3. Procédé conforme à la revendication 1 ou 2, **caractérisé en ce qu'** en tant que dépôt de brasure (9), il est prévu entre les pièces de tôle (2, 4) un insert (13) préformé et fluidifié par fusion sous l'action du chauffage par résistance.

4. Procédé conforme à l'une des revendications précédentes, **caractérisé en ce que** dans la pièce en tôle (4) de conductivité thermique plus élevée, sur les côtés de la liaison par brasage (5), une poche de réception (8) du dépôt de brasure (9) est préformée.

5. Procédé conforme à la revendication 4, **caractérisé en ce qu'** un bossage (12) en forme de gradins crée par la poche de réception (8), est obtenu par déformation en retour au moins partiellement sur le côté de la pièce de tôle situé à l'opposé de la poche de réception lors du chauffage par résistance avec action simultanée d'une pression.

EP 1 970 152 B1

Fig.1

Fig.2

a.)  b.)

Fig.3

a.)  b.)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19512089 C1
- DE 19729967 C1

- US 3860778 A